# EUROPÄISCHE PATENTSCHRIFT

(11) **EP 1 916 226 B1**
(45) Veröffentlichungstag und Bekanntmachung des Hinweises auf die Patenterteilung: **27.01.2010**
(21) Anmeldenummer: 07018612.7
(22) Anmeldetag: 21.09.2007
(51) Int. Cl.: C02F 1/76, C02F 1/70, C02F 101/12

(54) **Verwendung eines organischen Reduktionsmittels zur Wasseraufbereitung durch Entfernung von Chloramin, Chlor und anderen Aktivchlorverbindungen aus Hälterungswasser für Wasserorganismen.**
Use of an organic reducing agent for removing chloramine, chlorine and other active chlorine compounds from aquaculture water for water organisms
L'utilisation d'un agent organique de réduction pour la suppression de chloramine, de chlore et autres liaisons actives de chlore d'eau d'aquarium pour des organismes aquatiques

(30) Priorität: 22.09.2006 DE 102006045332
(43) Veröffentlichungstag der Anmeldung: 30.04.2008
(73) Patentinhaber: Tetra GmbH, 49324 Melle (DE)
(72) Erfinder: Ritter, Günter, 32257 Bünde (DE)
(74) Vertreter: Zimmermann, Gerd Heinrich

(56) Entgegenhaltungen:
- EP-A- 0 203 741
- EP-A- 0 278 515
- DE-A1- 4 420 484
- GB-A- 446 662
- GB-A- 191 419 722
- US-A- 2 861 040
- US-A- 4 257 899
- US-A- 4 364 835
- US-A- 4 666 610
- US-A- 5 082 573

## Beschreibung

Die Erfindung beschreibt die neuartige Verwendung von Mitteln zur Entfernung von Chloramin, Chlor und anderen Aktivchlorverbindungen aus als Hälterungswasser in Aquarien, Gartenteichen oder Aquakulturanlagen für Wasserorganismen vorgesehenem Wasser und Brauchwasser (z.B. Gießwasser für Pflanzen).

Chloramin, Chlor und andere Aktivchlorverbindungen in Hälterungswässern und Brauchwässern entstammen meist den Zusätzen für die desinfizierende Aufbereitung von biologisch verunreinigtem Wasser (aus Grundwasser, Seen, Flüssen etc.) zu Leitungswasser.
Die beschriebenen Mittel wurden zu dem nachfolgend genauer beschriebenen Zweck noch nicht eingesetzt und bieten gegenüber Mitteln und Methoden nach dem Stand der Technik erhebliche Vorteile.

Bislang wurde und wird zur Entfernung von Chloramin, Chlor und anderen Aktivchlorverbindungen aus frischem Leitungswasser, Hälterungswässern und Brauchwässern, die mit frischem Leitungswasser versetzt wurden, eine Reihe von Reduktionsmitteln eingesetzt, die gegenüber den in dieser Erfindung beschriebenen Mitteln Mängel oder Nachteile aufweisen.

Bei der folgenden Betrachtung wird das chemische Verhalten gegen Chloramin in den Vordergrund gestellt, da seine Verwendung zur Desinfektion von Leitungswasser weltweit bekannt ist und noch immer an Bedeutung gewinnt.

Meist wird das Reduktionsmittel aus Sicherheitsgründen im stöchiometrischen Überschuss eingesetzt, zumal auch der bereits vorhandene genaue Gehalt an Chloramin im Trinkwasser nicht bekannt ist.

Das seit Jahrzehnten zur Entfernung von Chlor verwendete Reduktionsmittel Thiosulfat reagiert mit Chloramin in einem 2:1-Molverhältnis, wobei Tetrathionat, S₄O₆²⁻, entsteht. Hier ist eine hohe molare Einsatzmenge Chloramin erforderlich. Das entstehende Tetrathionat wird mikrobiologisch unter relativ hohem Sauerstoffverbrauch zu Sulfat oxidiert. Dabei werden pro Mol S₄O₆² 4 Mol Sulfat gebildet

Der Einsatz von Natrium-hydroxymethansulfonat wird in EP-A 0 203 741 beschrieben. Na (HO-CH₂-SO₃⁻) ist zwar zur Reduktion von Chloramin gut geeignet, besitzt aber den schwerwiegenden Nachteil, dass bei der Reduktion mit H₂NCl Formaldehyd freigesetzt, der heute in biologischen Systemen als obsolet gilt.

Die Verwendung Natrium-hydroxymethansulfinat ist in EP-B 0 278 515 beschrieben. Neben einer Reihe von Vorteilen gegenüber Natrium-hydroxymethansulfonat, nämlich der höheren Reaktivität und sparsamerem Substanzeinsatz, bestehen hier folgende Nachteile: Natrium-hydroxymethansulfinat ist in Lösung sehr instabil, wenn es nicht durch geeignete Zusätze stabilisiert wird. Wie für das Sulfonat beschrieben ist auch hier die Bildung von Formaldehyd bei der Reaktion mit Chloramin unerwünscht.

Andere Reduktionsmittel werden derzeit in der Technik der Wasseraufbereitung in biologischen Systemen gewöhnlich nicht eingesetzt.

Es wurde nun gefunden, dass überraschenderweise chemische Verbindungen besonders leicht zugänglich sind, die sich überraschend wirksam zu Reduktion von Chloramin, Chlor und anderen Aktivchlorverbindungen einsetzen lassen und gegenüber den Mitteln nach dem Stand der Technik wichtige Vorteile bieten.
Trotz ihrer z. T. einfachen Zusammensetzung und der Tatsache, dass sie bereits sehr lange in anderen Bereichen der chemischen Technik verbreitet Verwendung finden, wurden sie für den erfindungsgemäßen Verwendungszweck in Hälterungswässern und Brauchwässern noch nicht eingesetzt.

Die erfindungsgemäß eingesetzten Reduktionsmittel leiten sich von organischen Derivaten des Hydrogensulfits, HSO₃⁻, insbesondere von folgenden Addukten ab:
- Addukte von (Natrium-)hydrogensulfit, (NaHSO₃,) HSO₃⁻ mit aliphatischen Mono- und Dialdehyden der allgemeinen Formel

   X - (CH₂)ₙ-CO-H,

   in welcher
   n die Zahlen 0 bis 3 und
   X eine -OH, -COOH oder -CO-H Gruppe bedeutet,
   wobei X nicht -OH sein kann, wenn n = 0 bedeutet,
   eingesetzt.

Die erfindungsgemäß eingesetzten Reduktionsmittel entstehen nach folgenden Reaktionsgleichungen:

### Reaktionsgleichung I

R₁-CHO + HSO⁻₃ → R₁-CH(OH)SO₃⁻

### und Reaktionsgleichung II

OHC-R₂-CHO + 2 HSO⁻ ₃ → ⁻O₃S(OH)CH-R₂-CH(OH)SO₃⁻

Die Reste R₁ und R₂ entsprechen den jeweiligen organischen Resten der eingesetzten Aldehyde der obigen allgemeinen Formel.

Beispielsweise lassen sich folgende Aldehyde und deren Homologe einsetzen:

### Aliphatische Monoaldehyde

- Acetaldehyd
- Propionaldehyd
(Formaldehyd wird aus den oben angegebenen Gründen nicht verwendet)

### Aliphatische Hydroxyaldehyde

- Glykolaldehyd
- Glycerinaldehyd

### Aliphatische Aldehydo-Carbonsäuren

- Glyoxylsäure

### Aliphatische Dialdehyde

- Glyoxal
- Malondialdehyd
- Succindialdehyd
- Glutardialdehyd

Bei allen genannten Beispielen ist der gegenüber Chloramin reaktive Teil Hydrogensulfit, Sulfit oder die Sulfonatgruppe in den Addukten mit aliphatischen Aldehyden, die als Hydrogensulfit in einem Dissoziations- bzw. Adduktbildungsgleichgewicht in geringen Mengen vorhanden ist oder mit fortschreitender Reaktion nach der Massenwirkungsgleichung nachgeliefert wird.
Die erfindungsgemäße Verwendung Mittel der hat insbesondere folgende Vorteile:
- Eine sehr rasche, definierte Reaktion von HSO₃⁻ mit Chloramin nach:

   HSO₃⁻ + H₂NCl + H₂O → SO₄²⁻ + Cl⁻ + NH₄⁺ + H⁺
   in aquimolerer Stöchiometrie
- Es wird in eindeutiger Reaktion ausschließlich Sulfat gebildet
- Es entfällt eine darauf folgende, O₂-verbrauchende mikobiologische Oxidationsreaktion von schwefelreichen Zwischenstufen.
- Die Mittel weisen eine sehr gute Verträglichkeit bei Fischen und anderen Wasserorganismen auf und zeichnen sich in flüssigen Produktzubereitungen in einem großen pH-Bereich, zum Beispiel von pH 3 bis pH 9 durch eine unerwartet hohe Stabilität aus. In schwach sauren bis neutralen Produktzubereitungen lassen sich vorteilhaft NaHSO₃ und die NaHSO₃-Addukte von aliphatischen Aldehyden einsetzen. In neutralen bis schwach alkalischen Produktzubereitungen kann man vorteilhaft die meisten NaHSO₃-Addukte von aliphatischen Aldehyden einsetzen. Bei der Verwendung von NaHSO₃ im schwach sauren Bereich (pH 3-5) kommt es in Glasflaschen nicht zu Verlusten an SO₂. Verluste lassen sich ebenfalls leicht vermeiden, wenn NaHSO₃-Addukte mit aliphatischen Aldehyden zum Einsatz kommen. Die wichtigsten Mittel, zur erfindungsgemäßen Verwendung NaHSO₃, Na₂SO₃, die Bis- NaHSO₃-Addukte mit Glyoxal und Glutardialdehyd sind außerordentlich preiswert. Nicht auf dem Markt erhältliche Addukte von NaHSO₃ mit außergewöhnlichen aliphatischen Aldehyden lassen sich einfach und mit guten Ausbeuten aus einer NaHSO₃-Lösung und den betreffenden Aldehyden herstellen und aus dem Reaktionsgemisch abtrennen, da deren Löslichkeit entweder in der Produktlösung selbst oder besonders in 38-40%igen NaHSO₃-Lösung sehr gering ist.

Die genannten Verbindungen lassen sich allein oder in beliebiger Kombination für den erfindungsgemäßen Verwendungszweck einsetzen.

Da alle genannten Verbindungen nach der für HSO₃⁻ beschriebenen Reaktion auch in großer Verdünnung mit H₂NCl rasch und vollständig reagieren, genügt es, eine an die vorhandene Chloraminkonzentration angepasste äquimolare Menge oder, (bezogen auf HSO₃⁻ oder die SO₃⁻-Sulfonatgrupp in den Aldehydaddukten besonders mit leichtem - zum Beispiel 5-10 Mol% - Überschuss) dem Wasser zuzusetzen. Da die Verbindungen als Salze eine gute Wasserlöslichkeit besitzen, kann man die gewünschte Menge an Reduktionsmittel in gelöster oder suspendierter Form oder als Pulver, Pressling, Granulat, Tablette usw. zufügen. Die Reduktion von H₂NCl, Chlor und anderen Aktivchlorverbindungen ist in wenigen Minuten abgeschlossen.

Die Dosierung der Reduktionsmittel (bezogen auf die chemisch redoxaktiven HSO₃⁻, -Anionen oder die Sulfonatgruppe in den Aldehydaddukten) erfolgt äquimolar (bevorzugt mit einem leichten Überschuss von 5 10 Mol-%) zu der Konzentration an Chloramin (H₂NCl).
Der Zusatz von Chloramin zum Trinkwasser wird in verschiedenen Regionen der Welt unterschiedlich hoch vorgenommen:
USA: Bis zu 5 mg/l H₂NCl
Europa: Bis zu 2-3 mg/l H₂NCI (im Mittel maximal 2,5 mg/l H₂NCI)
5 mg/l H₂NCI = 97,1 µMol/l
2,5 mg/l H₂NCl = 48,6 µMol/l

Zur Neutralisierung bzw. vollständigen Reduktion sind in den USA - 97,1 µMol/l HSO₃⁻, R-SO₃⁻ und in europäischen Staaten - 48,6 µMol/l HSO₃⁻, R-SO₃⁻ erforderlich. Zur Sicherheit wird man 5-10 Mol-% Überschuss vorsehen, da H₂NCI (und andere Aktivchlorverbindungen) hochtoxisch für Fische und andere Wasserorganismen sind. In Abhängigkeit der unterschiedlichen Formelgewichte der erfindungsgemäß eingesetzten Mittel sind entsprechend unterschiedliche Gewichtsmengen zu dosieren.
In den folgenden Tabellen werden die erforderlichen Gewichtsmengen für äquimolare Mengen der Einzelsubstanzen zusammengefasst. Ein molarer Überschuss von 5-10 Mol-% wurde in den Tabellen nicht berücksichtigt.
Glyoxal-bis-NaHSO₃-Addukt und Glutardialdehyd-bis NaHSO₃-Addukt sind die vorrangig eingesetzten Verbindungen.

**TABELLE I**

| Verbindung | Formelgewicht | 2,5 mg/l H₂NCI | 5,0 mg/l H₂NCI |
|---|---|---|---|
| NaHSO₃ nicht erfindungsgemäß | 104,06 | 5,1 mg/l | 10,1 mg/l |
| NaHSO₃ | 126,04 | 6,1 mg/l | 12,2 mg/l |
| Glyoxal·2NaHSO₃ nicht erfindungsgemäß | 266,17 | 6,5 mg/l | 12,9 mg/l |
| Glutardialdehyd·2 NaHSO₃ | 308,24 | 7,5 mg/l | 15,0 mg/l |

In der folgenden Tabelle werden die Mittel und deren erforderliche Dosierungen zusammen-gefasst, die eine untergeordnete Rolle als Chloramin-Reduktionsmittel einnehmen, aber ebenfalls für diesen Zweck eingesetzt werden.

**TABELLE II**

| Verbindung | Formelgewicht | 2,5 mg/l H₂NCl | 5,0 mg/l H₂NCl |
|---|---|---|---|
| Na₂S₂O₅ nicht erfindungsgemäß | 190,10 | 4,6 mg/l | 9,2 mg/l |
| Acetatdehyd·NaHSO₃ | 148,11 | 7,2 mg/l | 14,4 mg/l |
| Propionaldehyd·NaHSO₃ | 162,14 | 7,9 mg/l | 15,8 mg/l |
| Glykolaldehyd·NaHSO₃ | 164,11 | 8,0 mg/l | 16,0 mg/l |
| Glycerinaldehyd·NaHSO₃ | 194,14 | 9,4 mg/l | 18,9 mg/l |
| Glyoxylsäure·NaHSO₃ | 178,10 | 8,7 mg/l | 17,3 mg/l |
| Malondialdehyd·2NaHSO₃ | 280,18 | 6,8 mg/l | 13,6 mg/l |
| Succindialdehyd·2NaHSO₃ | 294,21 | 7,1 mg/l | 14,3 mg/l |

In den beiden Tabellen I und II wurden die stöchiometrischen Dosierungen für alle beschriebenen Reduktionsmittel zur vollständigen Reduktion von max. 2,5 mg/l Chloramin (EU) und max. 5,0 mg/l Chloramin (USA) aufgelistet.
Addiert man noch ca. 10%ige Sicherheitszuschläge, kommt man auf sichere Solldosierungen - die sich auf die Menge an zugesetztem frischem, mit Chloramin belastetem Leitungswasser von ca. 6-11 mg/l (für 2,5 mg/l H₂NCI) und ca. 11-22 mg/l (für 5,0 mg/l H₂NCI) beziehen.

Bei den bevorzugt eingesetzten Reduktionsmitteln Glyoxal·2NaHSO₃ und Glutardialdehyd·2 NaHSO₃ benötigt man Anwendungskonzentrationen zwischen 6-9 mg/l (2,5 mg/l H₂NCl) und12-18 mg/l (5,0 mg/l H₂NCl). Dosiert man diese Mengen vor oder während eines Wasserwechsels (mit Zusatz von frischem Leitungswasser) zu dem Hälterungswasser oder ganz allgemein zu dem Leitungswasser vor seiner Verwendung als Brauchwasser, werden Chloramin, Chlor und andere Aktivchlorverbindungen sicher, schnell und vollständig reduktiv eliminiert, sodass die mit dem frischen Leitungswasser in Berührung kommenden Organismen, zum Beispiel Fische, in Aquarien und Gartenteichen, völlig geschützt sind.

Alle genannten Reduktionsmittel können
- in gelöster Form in einer Produktlösung,
- in fester Form als Pulver, Tablette, Pressling, Granulat,
- als Suspension
den Hälterungssystemen zugesetzt werden.

Die folgenden Beispiele dienen der Erläuterung der Erfindung und schränken diese in keiner Weise ein.

### Beispiel 1

### Leitungswasseraufbereiter für Aquarien

Dosierung: 100 ml für 200 Liter Wasser
Cloramin-Reduktionskapazität: 2,5 mg/l
   - Metallkomplexierer
   - Hydrocolloide als Schleimhautschutz
   - B-Vitamine
   - Farbstoffe
   - Reduktionsmittel zur Entfernung von 2,5 mg/l Chloramin
      - NaHSO₃: 12 g/l (Vergleichsversuch) oder
      - Na₂SO₃: 15 g/l (Vergleichsversuch) oder
      - Glyoxal·2NaHSO₃: 15 g/l oder
      - Glutardialdehyd·2 NaHSO₃: 17 g/l

Wahlweise lassen sich auch verschiedene Reduktionsmittel kombinieren, zum Beispiel für obige Rezeptur
- NaHSO₃: 6,0 g/l
   plus
- Glyoxal·2NaHSO₃: 7,5 g/l
   oder
- Na₂SO₃: 7,5 g/l
   plus
- Glyoxal·2NaHSO₃: 7,5 g/l

### Beispiel 2

### Leitungswasseraufbereiter für Aquarien

Dosierung: 100 ml für 200 Liter Wasser
Cloramin-Reduktionskapazität: 5,0 mg/l
   - Rezepturkomponenten wie unter Beispiel 1
   - Reduktionsmittel zur Entfernung von 5,0 mg/l Chloramin
      - NaHSO₃: 24,0 g/l (Vergleichsversuch)
         oder
      - Na₂SO₃: 30,0 g/l (Vergleichsversuch)
         oder
      - Glyoxal·2NaHSO₃: 30,0 g/l
         oder
      - Glutardialdehyd·2 NaHSO₃: 34,0 g/l
         oder die Kombinationen
      - NaHSO₃: 12,0 g/l
         plus
      - Glyoxal·2NaHSO₃: 15,0 g/l
         oder
      - Na₂SO₃: 15,0 g/l
         plus
      - Glyoxal·2NaHSO₃: 15,0 g/l

### Beispiel 3

### Leitungswasseraufbereiter für Gartenteiche

Dosierung: 500 ml für 10.000 Liter Wasser
Cloramin-Reduktionskapazität: 2,5 mg/l
   - Metallkomplexbildner
   - Hydrocolloide als Schleimhautschutz
   - B-Vitamine
   - Farbstoffe
   - Reduktionsmittel zur Entfernung von 2,5 mg/l Chloramin
      - NaHSO₃: 120,0 g/l (Vergleichsversuch)
         oder
      - Na₂SO₃: 150,0 g/l (Vergleichsversuch)
         oder
      - Glyoxal·2NaHSO₃: 150,0 g/l

Im Beispiel 3 überschreitet die erforderliche Einsatzmenge an Glyoxal·2NaHSO₃ pro Liter die Löslichkeit, die etwa bei 50-60 g/l liegt. Hier ist es vorteilhaft, die restliche Menge an Glyoxal·2NaHSO₃, die über die Löslichkeit hinausgeht, als Suspension, u. U. stabilisiert durch einen Suspensionsstabilisator, zuzugeben.

### Beispiele 4, 5, 6

Es lässt sich auch ein flüssiges, monofunktionales Produkt herstellen, welches als einzige Komponente das Chloramin-Reduktionsmittel oder Gemische aus verschiedenen Chloramin-Reduktionsmitteln enthält.

Die Produktkonzentrationen sind mit den Angaben der Beispiele 1-3 identisch.

### Beispiele 7, 8, 9

Neben flüssigen Zubereitungen lassen sich die in kristalliner bzw. fester Form erhältlichen Reduktionsmittel auch in fester Form den Hälterungssystemen zusetzen.

Galenisch möglich sind
- Pulver bzw. Pulvergemische (Beispiel 7)
- Granulate (Beispiel 8)
- Tabletten (Beispiel 9)
Die Dosierungen im Hälterungswasser sind mit den Dosierungen, die in den Beispielen 1-3 beschrieben wurden, identisch. Der Gehalt der Reduktionsmittel in den verschiedenen Zubereitungen wird durch die Reichweite der Untereinheiten definiert, zum Beispiel 1 Tablette pro 20 I Wasser oder 1 Messlöffel an Granulat oder Pulver pro 10 I Wasser. Anhand der oben gegebenen Dosierungen (Tabellenwerte, plus 5-10%) lassen sich die Gehalte an den einzelnen Reduktionsmitteln oder deren Gemische in den festen Zubereitungen mit definierter Chloraminreduktionskapazität pro Dosiereinheit ausrechnen.

Zusätzlich können die festen Zubereitungen noch andere funktionale Komponenten enthalten, zum Beispiel
- Komplexbildner
- Hydrokolloide
- Vitamine
- galenische Hilfsstoffe
- Farbstoffe
- Verdünnungs-/Streckungsmittel

## Patentansprüche

1. Verwendung eines Mittels, das sich von organischen Derivaten und Addukten der schwefligen Säure ableitet, welche bei Reduktion von Chloramin kein Formaldehyd freisetzen, zur Wasseraufbereitung durch Entfernung von Chloramin, Chlor, und anderen Aktivchlorverbindungen aus Hälterungswasser für Wasserorganismen unter Einsatz von mindestens einem Reduktionsmittel.

2. Verwendung nach Anspruch 1, **dadurch gekennzeichnet, dass** die organischen Derivate und Addukte aus Aldehyden der allgemeinen Formel
X-(CH₂)ₙ-CO-H,
in welcher
n die Zahlen 0 bis 3 und
X eine -OH, -COOH oder -CO-H Gruppe bedeutet,
wobei X nicht -OH sein kann, wenn n = 0 bedeutet, bestehen.

3. Verwendung nach Anspruch 1 oder 2, **dadurch gekennzeichnet, dass** als Aldehyd mindestens ein aliphatischer Mono- oder Dialdehyd aus der Gruppe Acetaldehyd, Propionaldehyd, Glykolaldehyd, Glycerinaldehyd, Glyoxylsäure, Glyoxal, Malondialdehyd, Succindialdehyd oder Glutaraldehyd zum Einsatz kommen.

4. Verwendung gemäß Anspruch 1, **dadurch gekennzeichnet, dass** als Aldehyde Malondialdehyd, Succindialdehyd, Glykolaldehyd, Glyzerinaldehyd oder Glyoxylsäure verwendet werden.

5. Verwendung gemäß einem der Ansprüche 1 bis 3, wobei das Addukt in einer Konzentration von 40 bis 100 µMol/l HSO₃₋ oder R-SO₃₋ eingesetzt wird.

6. Verwendung gemäß einem der Ansprüche 1 bis 3, wobei ein molarer Überschuss von 5 - 10 Mol-% zugesetzt wird.

7. Verwendung gemäß Anspruch 5 oder 6, wobei das Addukt in einem Hälterungswasser bei einem pH-Wert von 3 bis 9 eingesetzt wird.

## Claims

1. Use of an agent that derives from organic derivatives and adducts of the sulfurous acid, which do not release formaldehyde during reduction with chloramine, for water treatment by removing chloramine, chlorine and other active chlorine compounds from keeping water for water organisms using at least one reducing agent.

2. Use according to claim 1, **characterized in that** the organic derivatives and adducts consist of aldehydes of the general formula
X-(CH₂)ₙ-CO-H,
wherein
n is an integer of 0 to 3 and
X is an -OH group, -COOH group, or -CO-H group,
wherein X is not -OH if n is 0.

3. Use according to claim 1 or 2, **characterized in that** as aldehyde at least one aliphatic mono or dialdehyde from the group acetaldehyde, propionaldehyde, gycolaldehyde, glyeraldehyde, glyoxylic acid, glyoxal, malondialdehyde, succindialdehyde, or glutardialdehyde is used.

4. Use according to claim 1, **characterized in that** as aldehyde malondialdehyde, succindialdehyde, gycolaldehyde, glyceraldehyde, or glyoxylic acid is used.

5. Use according to any of claims 1 to 3, wherein the adduct is used in a concentration of from 40 to 100 µmol/l HSO₃⁻ or R-SO₃⁻.

6. Use according to any of claims 1 to 3, wherein a molar excess of 5 - 10 mol-% is added.

7. Use according to claim 5 or 6, wherein the adduct is used in a keeping water at a pH of 3 to 9.

## Revendications

1. Utilisation d'un agent obtenu à partir de dérivés organiques et d'adducts de l'acide sulfureux, lequel ne donne pas lieu à un dégagement de formaldéhyde lors d'une réduction par la chloramine, dans le but de traiter de l'eau par au moins un agent réducteur pour l'élimination de chloramine, chlore et autres composés de chlore actifs contenus dans de l'eau d'aquarium pour organismes aquatiques.

2. Utilisation selon la revendication 1, **caractérisée en ce que** les dérivés organiques et adducts consistent en aldéhydes de formule générale
X-(CH₂)ₙ-CO-H,
dans laquelle
- n est un nombre entier de 0 à 3 et
- X est un groupe -OH, un groupe -COOH, ou un groupe -CO-H, dans lequel X n'est pas -OH quand n est 0.

3. Utilisation selon la revendication 1 ou 2, **caractérisée en ce que** en tant qu'aldéhyde est employé au moins un mono ou dialdéhyde aliphatique du groupe consistant en acétaldéhyde, propionaldéhyde, glycolaldéhyde, glycéraldéhyde, acide glyoxylique, glyoxal, dialdéhyde malonique, dialdéhyde succinique, ou dialdéhyde glutarique.

4. Utilisation selon la revendication 1, **caractérisée en ce que** en tant qu'aldéhyde est employé le dialdéhyde malonique, le dialdéhyde succinique, le glycolaldéhyde, le glycéraldéhyde, ou l'acide glyoxylique.

5. Utilisation selon une quelconque des revendications 1 à 3, dans laquelle l'adduct est employé en une concentration comprise entre 40 et 100 µmol/l HSO₃- ou R-SO₃-.

6. Utilisation selon une quelconque des revendications 1 à 3, dans laquelle est ajouté un excès molaire de 5 à 10 mol%.

7. Utilisation selon la revendication 5 ou 6, dans laquelle l'adduct est employé à un pH de 3 à 9 dans de l'eau d'aquarium.
